# EUROPÄISCHE PATENTSCHRIFT

(11) **EP 2 217 833 B1**
(45) Veröffentlichungstag und Bekanntmachung des Hinweises auf die Patenterteilung: **25.01.2012**
(21) Anmeldenummer: 08856910.8
(22) Anmeldetag: 27.11.2008
(51) Int. Cl.: F16H 25/06

(54) **ANTRIEBSEINHEIT, MIT ZUMINDEST EINER ÜBERSETZUNGSSTUFE**
DRIVE UNIT HAVING AT LEAST ONE TRANSMISSION STAGE
UNITÉ D'ENTRAÎNEMENT PRÉSENTANT AU MOINS UN ÉTAGE DE DÉMULTIPLICATION

(30) Priorität: 04.12.2007 DE 102007058605
(43) Veröffentlichungstag der Anmeldung: 18.08.2010
(73) Patentinhaber: Wittenstein AG, 97999 Igersheim (DE)
(72) Erfinder: BAYER, Thomas, 97999 Igersheim (DE)
(74) Vertreter: Zimmermann & Partner
(86) Internationale Anmeldenummer: PCT/EP2008/010050
(87) Internationale Veröffentlichungsnummer: WO 2009/071228

(56) Entgegenhaltungen:
- WO-A-2008/119418
- DE-A1-102007 016 189
- DE-A1-102007 020 415
- GB-A- 153 982
- GB-A- 400 282
- US-A1- 2003 047 025

## Beschreibung

Die vorliegende Erfindung betrifft eine Antriebseinheit nach dem Oberbegriff des Anspruchs 1.

Herkömmliche Antriebseinheiten sind in verschiedener Form und Ausführung im Markt bekannt und erhältlich. So ist beispielsweise in der GB 153 982 ein Übersetzungsgetriebe gezeigt. Dort werden über eine Antriebswelle, welche von einem Elektromotor angetrieben wird, verschiedene in Öffnung liegende Elemente angestossen. Daneben sind ausserdem aus der US 2003/047025 und aus der GB 400 282 entsprechende Übersetzungen gezeigt.

Im Stand der Technik werden meist an herkömmliche Elektromotoren unterschiedliche Getriebe mit unterschiedlichen Übersetzungsstufen kunden- und leistungsspezifisch angeschlossen.

Nachteilig ist, dass ein Bauraum sehr beschränkt ist, die Herstellungskosten durch zwei Gehäuseformen sehr aufwendig ist, zu viele Lagerungen erforderlich sind, was Reibungsverluste, etc. verursacht.

Ferner sind Antriebseinheiten, bekannt, bei welchen Teile von Getrieben und Teile von den elektrischen Antrieben zumindest teilweise ineinander verschmolzen sind, so dass Teile des Abtriebsstranges eines elektrischen Antriebes bereits als Antriebsstrang oder Element eines direkt nachgeschalteten Getriebes oder einer Übersetzungsstufe gebildet sind, Auch hier sind die Leistungen derartige Getriebe bei sehr grossen Baugrössen beschränkt.

Auch sind als Antriebseinheiten Generatoren bekannt, bei welchen ein Drehmoment direkt oder über ein vorgeschaltetes Getriebe auf einen Generator übertragen wird, um im Generator Strom zu erzeugen.

Aus GB 153982, das den nächstliegenden Stand der Technik repräsentiert, ist ein Antriebseinheit mit den Merkmalen des Oberbegriffs des Anspruchs 1 bekannt.

Auch derartige Antriebseinheiten sollen vom gattungsbildenden Oberbegriff umfasst sein.

Der vorliegenden Erfindung liegt die Aufgabe zugrunde eine Antriebseinheit mit einem elektrischen Antrieb zu schaffen, welche die genannten Nachteile der herkömmlichen Antriebseinheiten beseitigt, wobei sehr hohe Momente unter optimaler Ausnutzung eines Bauraumes bei Reduktion der Baulänge und Durchmesser gewährleistet werden soll. Zudem soll eine sehr hohe Leistungsdichte und Kompaktheit bei geringstmöglichem Einbauraum und Gewicht möglich sein.

Zur Lösung dieser Aufgabe führen die Merkmale des Kennzeichens des Patentanspruches 1 sowie die der nebengeordneten Patentansprüche.

Ferner ist aus dem Stand der Technik bekannt, dass als Antriebseinheiten Einheiten zu verstehen sind, bei welchen ein Antriebsmoment aus einem elektrischen Antrieb auf eine Übersetzungsstufe übertragen wird, um das Antriebsmoment des elektrischen Antriebes in wählbaren Übersetzungsstufen zu übersetzen.

Ferner soll jedoch auch in den Rahmen des gattungsbildenden Begriffs des Antriebselementes fallen, dass auch der umgekehrte Weg möglich ist und ein über eine Übersetzungsstufe oder ein Getriebe eingeleitetes Antriebsmoment in wählbaren Übersetzungsstufen übersetzt wird, um einen Generator zur Erzeugung von Strom anzutreiben. Beide Ausführungsformen sollen unter dem Oberbegriff Antriebseinheit in der vorliegenden Erfindung zu verstehen sein.

Bei der vorliegenden Erfindung hat es sich als besonders vorteilhaft erwiesen, eine Antriebseinheit zu schaffen, bei welcher in einem äusseren Gehäuse ein Stator vorgesehen oder das äussere Gehäuse als Stator ausgebildet ist.

Koaxial innerhalb des Gehäuses bzw. des Stators sitzt das eigentliche Antriebselement koaxial rotativ gelagert und weist eine entsprechende Mehrzahl von radial aussen angeordnete Magnetfelderregern, insbesondere Permanentmagnete oder aktiv erregbare Magnete, wie Spulen od. dgl. auf, die über den Stator zur rotativen Bewegung des Antriebselementes antreibbar sind.

Dabei ist ein Elektromotor mit einem äusserst grossen Durchmesser gebildet, welcher der Übertragung von sehr grossen Drehmomenten auf das Antriebselement dient.

Das Antriebselement dient gleichzeitig durch seine innere Kontur als Antrieb für das Koaxialgetriebe zur direkten oder indirekten Beaufschlagung von mehreren in einem Element radial bewegbar gelagerten Zahnsegmenten, die mit einem inneren Abtriebselement mit Aussenverzahnung in ein Eingriff stehen.

Auf diese Weise lässt sich die Wärme über das Gehäuse bzw. über den Stator bei sehr grossem Durchmesser sehr leicht nach aussen abführen, wodurch zudem durch den grossen Durchmesser eine hohe Drehmomentübertragung des integrierten elektrischen Antriebes, der zwischen Antriebselement und Gehäuse gebildet ist, auf das starre Element mit den eingesetzten Zahnsegmenten zur Herstellung einer Übersetzung an das Abtriebeselement erfolgt.

Durch diesen erfindungsgemässen Aufbau der Antriebseinheit ist eine vollständige Integration des Getriebes bzw. der Übersetzungsstufe in den elektrischen Antrieb bzw. der elektrische Antrieb in das Getriebe möglich, was eine erhebliche Baulängenreduktion gegenüber herkömmlichen Standartmotor-Getriebe-Kombinationen ermöglicht.

Zudem ist die Leistungsdichte durch den grossen Durchmesser des elektrischen Antriebes verbessert. Eine Hohlwelle als Abtriebselement kann mit wesentlich grösserem Durchmesser hergestellt werden, was ebenfalls von Bedeutung ist.

Weitere Vorteile, Merkmale und Einzelheiten der Erfindung ergeben sich aus der nachfolgenden Beschreibung bevorzugter Ausführungsbeispiele, diese zeigen in;
Figuren 1a und 1b schematisch dargestellte Draufsichten auf herkömmliche Antriebseinheiten zum Übertragen und Übersetzen von Momenten mit elektrischem Antrieben;
Figur 2 einen schematisch dargestellten Querschnitt durch eine erfindungsgemässe Antriebseinheit;
Figur 3 einen schematisch dargestellten Längsschnitt durch die erfindungsgemässe Antriebseinheit gemäss Figur 2.

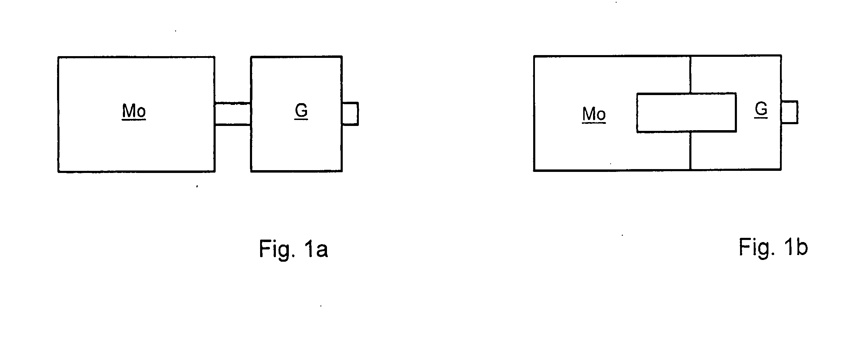

Gemäss der Figur 1a weist eine herkömmliche Antriebseinheit eines elektrischen Antrieb, insbesondere eines elektrischen Motor Mo und zumeist ein daran anschliessendes Getriebe G auf.

Dabei können unterschiedlichste Getriebe G an unterschiedlichste Motoren Mo hintereinander auch in unterschiedlichen Übersetzungsstufen zusammengesetzt werden, um gewünschte Drehzahl und Drehmomente und Leistungsstufen zu erhalten. Nachteilig ist, dass das Gesamtgewicht, Produktionskosten und Baulänge im Verhältnis zur Leistung nicht optimiert sind.

Ferner sind Antriebseinheiten im Stand der Technik bekannt, wie sie in Figur 1b angedeutet sind, die auch aus einem elektrischen Antrieb, insbesondere einem Motor Mo und einem Getriebe G gebildet sind, wobei einzelne Bauteile abtriebsseitig des Motors in antriebsseitige Bauteile des Getriebes miteinander verschmolzen sind.

Jedoch ist dies immer noch keine optimale Lösung, um ein Gesamtgewicht, bezogen auf die gesamte Leistung deutlich zu reduzieren.

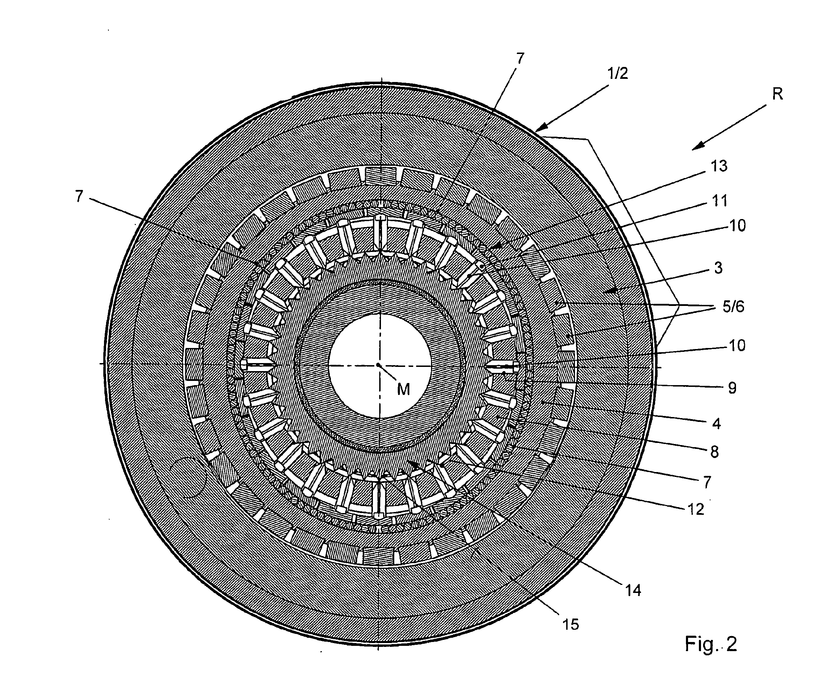

Gemäss Figur 2 weist eine erfindungsgemässe Antriebseinheit R, für die industrielle Antriebstechnik mit hoher Leistungsdichte, ein Gehäuse 1 auf, welches als Stator 2 ausgebildet ist. Das Gehäuse 1, insbesondere der Stator 2 ist kreisringartig ausgebildet und weist eine Mehrzahl von hier nur angedeuteten Erregerspulen 3 auf, die nach innen gerichtet radial verteilt angeordnet sind.

Innerhalb des Gehäuses 1 bspw. innerhalb des Stators 2 ist ein Antriebselement 4 rotativ innerhalb, angeordnet und weist aussen eine Mehrzahl von radial angeordneten Magnetfelderreger 5, insbesondere Permanentmagnete 6, oder auch aktiv erregbare Magnete auf. Dabei können die Magnetfelderreger 5, insbesondere die Permanentmagnete 6 dem Antriebselement 4 aufsitzen, oder in diesem integriert sein. Hierauf sei die Erfindung nicht beschränkt.

Das Antriebselement 4 ist über die Verzahnung gegenüber dem Gehäuse 1 rotativ drehbar um eine Mittelachse M gelagert, wie es hier nur angedeutet und nicht näher dargestellt ist. Dabei weist das Antriebselement 4 eine innere Kontur 7 auf, die als Innenfläche konturiert ausgebildet ist.

Dabei kann die innere Kontur 7 des Antriebselementes 4 bspw. als polygonartig ausgebildete Kontur 7 hergestellt sein.

Innerhalb des Antriebselementes 4 ist ein Element 8 angeordnet, insbesondere drehfest mit dem Gehäuse 1 oder Stator 2 verbunden, um in radialen Führungen 9 einzelne Zahnsegmente 10 radial zu führen und zu lagern.

Die Zahnsegmente 10 weisen einen nach aussen gerichteten Zahnfuss 11 und eine nach innen gerichtete Zahnflanke 12 auf.

Um die einzelnen Zahnsegmente 10 radial nach innen oder aussen zu bewegen, gelangen deren Zahnfüsse 11 direkt oder indirekt in Kontakt mit der Kontur 7 des Antriebselementes 4, und werden dann entsprechend der Kontur 7 des bewegten Antriebselementes 4 radial nach innen oder aussen bewegt.

Bevorzugt soll jedoch zwischen dem Zahnfuss 11 und der inneren Kontur 7 des Antriebselementes 4 ein der Kontur 7 folgendes Zwischenelement 13 vorgesehen sein, welches die entsprechende Bewegung der Kontur 7 auf die jeweiligen Zahnsegmente 10 überträgt.

Das Zwischenelement 13 kann bspw. ein flexibler Ring, ein segmentierter Lagerring und/oder eine Wälzlagerung od. dgl. sein, um die einzelnen Zahnsegmente 7 mittels der Kontur 11 nach innen oder aussen gelagert zu bewegen.

Durch die entsprechende Kontur 7 des Antriebselementes 4 lassen sich die Zahnsegmente 10 in Abhängigkeit der Kontur 7 entsprechend nach innen und aussen bewegen, so dass diese bei dieser Bewegung ein Abtriebselement 14, welches koaxial innerhalb des Elementes 8 angeordnet ist kämmen. Das Abtriebselement 14 weist eine Aussenverzahnung 15 auf, in welche zur Herstellung einer Übersetzung die einzelnen Zahnsegmente 10 mit ihren Zahnflanken 12 eingreifen. Das Abtriebselement 14 mit seiner Aussenverzahnung 15 ist bevorzugt als Hohlwelle ausgebildet. Dieses kann jedoch auch als herkömmliche Welle ausgebildet sein, um ein Abtriebsmoment zu übertragen.

Bei der vorliegenden Erfindung hat sich als besonders vorteilhaft erwiesen, dass im Gehäuse 1 koaxial der elektrische Antrieb mit einem sehr grossen Durchmesser vorgesehen ist. Somit lässt sich eine Antriebseinheit R mit sehr geringer Baulänge und integriertem elektrischen Antrieb mit hohem Antriebsmoment herstellen und kann dennoch eine hohe Übersetzung koaxial innerhalb des Antriebselementes über eine Mehrzahl von Zahnsegmenten auf ein Abtriebselement 4 übertragen.

Durch das aussen liegende Gehäuse 1, insbesondere durch den aussen liegenden Stator 2 und koaxial innen liegenden Antriebselement 4 mit Magnetfelderreger 5 lässt sich eine Wärme nach aussen optimal abführen, wodurch auch die Leistung der Antriebseinheit R deutlich erhöht ist.

Zudem ist durch die erfindungsgemässe Anordnung der Antriebseinheit R und seiner Bauteile ein Bauraum optimal ausgenutzt und hierdurch eine Leistungsdichte optimiert. Zudem lässt sich ein sehr grosser Hohlwellendurchmesser des Abtriebselementes 14 realisieren, so dass eine kreisringartige Antriebseinheit, bspw. als Koaxialgetriebe mit integriertem leistungsstarken Antrieb geschaffen ist.

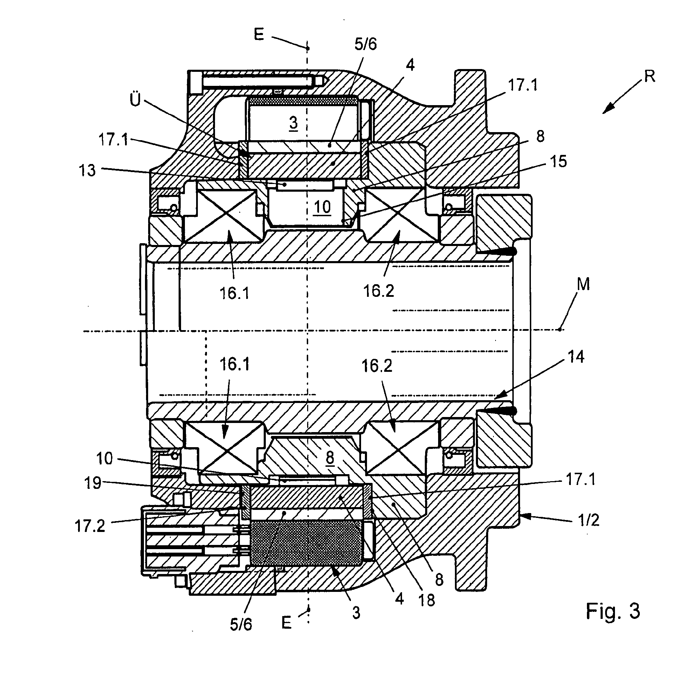

Im Ausführungsbeispiel gemäss Figur 3 ist das Koaxialgetriebe im Längsschnitt gemäss Figur 2 aufgezeigt.

Dort ist ersichtlich, wie im Gehäuse 1 dieses bspw. als Stator 2 genutzt wird, um dort im Gehäuse 1 die Erregerspulen 3 kreisringartig anzuordnen.

Koaxial innerhalb, bevorzugt in einer gemeinsamen Ebene E ist dann das elektrische Antriebselement 4 mit seiner inneren Kontur 7 eingesetzt, wobei im bevorzugten Ausführungsbeispiel an seiner äusseren Mantelfläche die Mehrzahl von Magnetfelderregern 5, insbesondere Permanentmagnete 6 angeordnet ist.

Dabei beaufschlagt die innere Kontur 7, bevorzugt über zumindest ein Zwischenelement 13, die im Element 8 in der Führung 9 gelagerten Zahnsegmente 10, welche die Aussenverzahnung 15 des Abtriebselementes 14 kämmen.

Die einzelnen Elemente sind koaxial angeordnet.

Dabei ist im bevorzugten Ausführungsbeispiel das Element 8 zur radialen Lagerung der einzelnen Zahnsegmente 10 fest mit dem Gehäuse 1 verbunden, bzw. mit diesem festgelegt. Innen an diesem stützen sich die Lagerelemente 16.1, 16.2 stirnseitig neben der Aussenverzahnung 15 und stirnseitig neben den Zahnsegmenten 10 ab und lagern auf diese Weise das koaxial innenliegende Abtriebselement 14. Dieses kann bevorzugt als Hohlwelle mit grossem Durchmesser, aber auch als beliebige andere Welle ausgeformt sein.

Entsprechende hier nicht näher dargestellte Dichtelemente dichten stirnseitig dem Bereich zwischen Antriebselement 14 und Gehäuse 1 ab.

Von Vorteil ist auch bei der vorliegenden Erfindung, dass die eigentliche Lagerung des elektrischen Antriebselementes 4, welches über die Erregerspulen 3 des Stators 2 rotativ angetrieben wird, in Radialrichtung durch das mittels den Erregerspulen 3 erzeugte Magnetfeld erfolgt und gleichzeitig auch eine axiale Lagerung gewährleistet wird.

Zusätzlich können stirnseitig jeweils beidseitig an das elektrische Antriebselement 4 Lager 17.1, 17.2, bevorzugt ausgebildet als Axiallager, anschliessen, die sich am Element 8 an einem stirnseitigen Flansch 18 abstützen. Andererseits erfolgt von einem weiteren Flansch 19 eine stirnseitige Abstützung des Antriebselementes 4.

Bevorzugt sind die Lager 17.1, 17.2 lediglich als reine Gleitlager ausgebildet und dienen lediglich dem geringfügigen Ausrichten und Zentrieren bzw. begrenzen des Spiels in Axialrichtung. Dies soll ebenfalls im Rahmen der vorliegenden Erfindung liegen.

Daher kann eine Axial- und/der Radiallagerung, bspw. als separate Wälzlagerung des elektrischen Antriebselementes 4 entfallen, was wiederum Reibung reduziert, Bauraum schafft und eine geringere Baulänge sowie einen geringeren Durchmesser der Antriebseinheit gewährleistet.

Bei der vorliegenden Erfindung ist eine Antriebseinheit R geschaffen, die sehr kompakt ist, die auf sehr kurzem Bauraum einen Antrieb und auch eine Übersetzungsstufe Ü als Antriebseinheit R gewährleistet, um sehr hohe Momente durch den kreisringartig ausgebildeten Antriebselement 4 auf die Übersetzungsstufe Ü zu übertragen. Gleichzeitig verschmelzen bei der vorliegenden Erfindung die Bauteile des elektrischen Antriebselementes 4 als Abtrieb der elektrischen Antriebseinheit zum Antriebselement der Übersetzungsstufe Ü der Antriebseinheit R.

Ein Ausführungsbeispiel einer erfindungsgemässen Antriebseinheit weist eine axiale und/oder radiale Lagerung des Antriebselementes 4, mit radial umlaufend zugeordneten Magnetfelderregern 5 / Permanentmagneten 6 über ein sich aufbauendes Magnetfeld, insbesondere über die Erregerspulen 3 radial und/oder axial zur Mittelachse M erfolgt, auf.

Ein Ausführungsbeispiel einer erfindungsgemässen Antriebseinheit weist stirnseitig das elektrische Antriebselement 4 zur axialen und/oder radialen Lagerung gegenüber einerseits dem Element 8 und andererseits gegenüber dem Gehäuse 1 jeweils ein Lager 17.1, 17.2 auf.

Ein Ausführungsbeispiel einer erfindungsgemässen Antriebseinheit wobei das Lager 17.1, 17.2 als kreisringartiges Gleitlager zur axialen und/oder radialen Lagerung des Antriebselements 4 vorgesehen ist.

### Bezugszeichenliste

| | | | | | |
|---|---|---|---|---|---|
| 1 | Gehäuse | 34 | | 67 | |
| 2 | Stator | 35 | | 68 | |
| 3 | Erregerspulen | 36 | | 69 | |
| 4 | Antriebselement | 37 | | 70 | |
| 5 | Magnetfelderreger | 38 | | 71 | |
| 6 | Permanentmagnete | 39 | | 72 | |
| 7 | Kontur | 40 | | 73 | |
| 8 | Element | 41 | | 74 | |
| 9 | Führung | 42 | | 75 | |
| 10 | Zahnsegment | 43 | | 76 | |
| 11 | Zahnfuss | 44 | | 77 | |
| 12 | Zahnflanke | 45 | | 78 | |
| 13 | Zwischenelement | 46 | | 79 | |
| 14 | Abtriebselement | 47 | | | |
| 15 | Aussenverzahnung | 48 | | R | Antriebseinheit |
| 16 | Lagerelement | 49 | | | |
| 17 | Lager | 50 | | M | Mittelachse |
| 18 | Flansch | 51 | | | |
| 19 | Flansch | 52 | | Ü | Übersetzungsstufe |
| 20 | | 53 | | | |
| 21 | | 54 | | | |
| 22 | | 55 | | E | Ebene |
| 23 | | 56 | | | |
| 24 | | 57 | | M | Mittelachse |
| 25 | | 58 | | | |
| 26 | | 59 | | G | Getriebe |
| 27 | | 60 | | | |
| 28 | | 61 | | Mo | Motor |
| 29 | | 62 | | | |
| 30 | | 63 | | | |
| 31 | | 64 | | | |
| 32 | | 65 | | | |
| 33 | | 66 | | | |

## Patentansprüche

1. Antriebseinheit mit zumindest einer Übersetzungsstufe (Ü) und einem Antriebselement (4) für die Antriebstechnik mit hoher Leistungsdichte,
- einem Element (8) und
- einem Abtriebselement (14),
- wobei eine Übersetzung sowie eine Übertragung eines Antriebsmoments zwischen Antriebselement (4) und Abtriebselement (14) über eine Mehrzahl von radial bewegbaren Zahnsegmenten (10) erfolgt, wobei das Antriebselement (4) als elektrischer Antrieb für die Übersetzungsstufe (Ü) gebildet ist
**dadurch gekennzeichnet,**
**dass** das Antriebselement (4) als elektrisches Antriebselement und die zumindest eine Übersetzungsstufe (Ü) koaxial zueinander angeordnet sind und radial in einer gemeinsamen Ebene (E) liegen, wobei das Antriebselement (4) als elektrisch angetriebenes Rotorelement ausgebildet und koaxial in einem als Stator (2) ausgebildeten Gehäuse (1) angeordnet ist.

2. Antriebseinheit nach Anspruch 1, **dadurch gekennzeichnet, dass** das Antriebselement (4) als elektrischer Antrieb für die zumindest eine Übersetzungsstufe (Ü) dient und gleichzeitig den Abtrieb des elektrischen Antriebs bildet.

3. Antriebseinheit nach wenigstens einem der Ansprüche 1 und 2, **dadurch gekennzeichnet, dass** das Antriebselement (4) innen eine Kontur (7) aufweist.

4. Antriebseinheit nach Anspruch 3, **dadurch gekennzeichnet, dass** die innere Kontur (7) des Antriebselementes (4) polygonartig ausgeformt ist.

5. Antriebseinheit nach wenigstens einem der Ansprüche 1 bis 4, **dadurch gekennzeichnet, dass** innerhalb des Antriebselementes (4) koaxial ein Element (8) mit einer Mehrzahl von in Führungen (9) eingesetzten und radial bewegbaren Zahnsegmenten (10) eingesetzt ist.

6. Antriebseinheit nach wenigstens einem der Ansprüche 1 bis 5, **dadurch gekennzeichnet, dass** die Zahnsegmente (10) mit der inneren Kontur (7) des Antriebselementes (4) direkt oder über ein Zwischenelement (13) beaufschlagt werden, um ein koaxial innerhalb des Elementes (8), insbesondere der Zahnsegmente (10) angeordnetes Abtriebselement (14) übersetzt anzutreiben.

7. Antriebseinheit nach wenigstens einem der Ansprüche 1 bis 6, **dadurch gekennzeichnet, dass** das Abtriebselement (14) eine Aussenverzahnung (15) aufweist.

8. Antriebseinheit nach Anspruch 7, **dadurch gekennzeichnet, dass** die Zahnsegmente (10) einzeln oder in Gruppen in die jeweiligen Aussenverzahnungen (15) des Abtriebselementes (14) zur Herstellung einer Übersetzung radial eingreifen.

9. Antriebseinheit nach wenigstens einem der Ansprüche 1 bis 8, **dadurch gekennzeichnet, dass** das Abtriebselement (14) als Welle oder als Hohlwelle mit Aussenverzahnung (15) gebildet ist.

10. Antriebseinheit nach wenigstens einem der Ansprüche 6 bis 9, **dadurch gekennzeichnet, dass** das Zwischenelement (13) als Zwischenlagerring, als segmentierte Wälz- oder Gleitlagerung ausgebildet ist.

11. Antriebseinheit nach wenigstens einem der Ansprüche 1 bis 10, **dadurch gekennzeichnet, dass** das Antriebselement (4) der Übersetzungsstufe eine Mehrzahl von radial aussen angeordnete Magnetfelderreger (5) aufweist.

12. Antriebseinheit nach wenigstens einem der Ansprüche 1 bis 12, **dadurch gekennzeichnet, dass** das Gehäuse (1) als Stator (2) ausgebildet ist, in welchem eine Mehrzahl von Erregerspulen (3) angeordnet sind, um das mit Magnetfelderregern (5) bestückte Antriebselement (4) rotativ um eine Mittelachse (M) anzutreiben.

13. Antriebseinheit nach wenigstens einem der Ansprüche 1 bis 12, **dadurch gekennzeichnet, dass** eine Lagerung des Antriebselementes (4) zwischen dem Abtriebselement (14) und dem Element (8) über Lagerelemente (16.1, 16.2) erfolgt.

## Claims

1. Drive unit having at least one conversion stage (Ü) and a drive element (4) for driving with high power density,
- an element (8), and
- a driven element (14),
- a conversion and a transfer of a drive torque taking place between the drive element (4) and the driven element (14) via a plurality of radially movable toothed segments (10), the drive element (4) being embodied as an electric drive for the conversion stage (Ü),
**characterised**
**in that** the drive element (4) as an electric drive element and the at least one conversion stage (Ü) are arranged coaxially with one another and lie radially in a common plane (E), the drive element (4) being designed as an electrically driven rotor element and being arranged coaxially in a housing (1) designed as a stator (2).

2. Drive unit according to Claim 1, **characterised in that** the drive element (4) serves as an electric drive for the at least one conversion stage (Ü) and at the same time forms the output of the electric drive.

3. Drive unit according to at least one of Claims 1 and 2, **characterised in that** the drive element (4) has a contour (7) on the inside.

4. Drive unit according to Claim 3, **characterised in that** the inner contour (7) of the drive element (4) is shaped in such a way as to be polygonal.

5. Drive unit according to at least one of Claims 1 to 4, **characterised in that** an element (8) having a plurality of toothed segments (10) inserted into guides and capable of radial movement is inserted coaxially within the drive element (4).

6. Drive unit according to at least one of Claims 1 to 5, **characterised in that** the toothed segments (10) are acted upon by the inner contour (7) of the drive element (4) directly or via an intermediate element (13) in order to drive a driven element (14) arranged coaxially within the element (8), in particular within the toothed segments (10), with a conversion ratio.

7. Drive unit according to at least one of Claims 1 to 6, **characterised in that** the driven element (14) has external teeth (15).

8. Drive unit according to Claim 7, **characterised in that** the toothed segments (10) engage radially, individually or in groups, in the respective external teeth (15) of the driven element (14) to produce a conversion ratio.

9. Drive unit according to at least one of Claims 1 to 8, **characterised in that** the driven element (14) is embodied as a shaft or as a hollow shaft with external teeth (15).

10. Drive unit according to at least one of Claims 6 to 9, **characterised in that** the intermediate element (13) is designed as an intermediate bearing ring or as a segmented rolling-contact or sliding bearing assembly.

11. Drive unit according to at least one of Claims 1 to 10, **characterised in that** the drive element (4) of the conversion stage has a plurality of magnetic field exciters (5) arranged radially on the outside.

12. Drive unit according to at least one of Claims 1 to 12, **characterised in that** the housing (1) is designed as a stator (2), in which a plurality of excitation coils (3) are arranged in order to drive the drive element (4) fitted with magnetic field exciters (5) in rotation about a centre line (M).

13. Drive unit according to at least one of Claims 1 to 12, **characterised in that** the drive element (4) is supported between the driven element (14) and the element (8) by means of bearing elements (16.1, 16.2).

## Revendications

1. Unité d'entraînement avec au moins un étage de démultiplication (Ü) et un élément d'entraînement (4) pour la technique d'entraînement à haute densité de puissance,
- un élément (8), et
- un élément de sortie (14),
- une démultiplication ainsi qu'une transmission d'un couple d'entraînement entre l'élément d'entraînement (4) et l'élément de sortie (14) ayant lieu par l'intermédiaire d'une pluralité de segments de dent (10) déplaçables radialement, l'élément d'entraînement (4) étant réalisé sous forme d'entraînement électrique pour l'étage de démultiplication (Ü),
**caractérisée par le fait**
**que** l'élément d'entraînement (4) comme élément d'entraînement électrique et l'au moins un étage de démultiplication (Ü) sont disposés coaxialement entre eux et se situent radialement dans un plan commun (E), l'élément d'entraînement (4) étant réalisé sous forme d'élément de rotor à entraînement électrique et étant disposé coaxialement dans un boîtier (1) réalisé sous forme de stator (2).

2. Unité d'entraînement selon la revendication 1, **caractérisée par le fait que** l'élément d'entraînement (4) sert d'entraînement électrique pour l'au moins un étage de démultiplication (Ü) et constitue en même temps la sortie de l'entraînement électrique.

3. Unité d'entraînement selon au moins l'une des revendications 1 et 2, **caractérisée par le fait que** l'élément d'entraînement (4) présente intérieurement un contour (7).

4. Unité d'entraînement selon la revendication 3, **caractérisée par le fait que** le contour intérieur (7) de l'élément d'entraînement (4) est réalisé de forme polygonale.

5. Unité d'entraînement selon au moins l'une des revendications 1 à 4, **caractérisée par le fait qu'**à l'intérieur de l'élément d'entraînement (4) est placé coaxialement un élément (8) avec une pluralité de guides (9) et de segments de dent (10) déplaçables radialement, (10).

6. Unité d'entraînement selon au moins l'une des revendications 1 à 5, **caractérisée par le fait que** les segments de dent (10) sont soumis au contour intérieur (7) de l'élément d'entraînement (4), directement ou par l'intermédiaire d'un élément intermédiaire (13), pour entraîner par multiplication un élément de sortie (14) disposé coaxialement à l'intérieur de l'élément (8), en particulier des segments de dent (10).

7. Unité d'entraînement selon au moins l'une des revendications 1 à 6, **caractérisée par le fait que** l'élément de sortie (14) présente une denture extérieure (15).

8. Unité d'entraînement selon la revendication 7, **caractérisée par le fait que** les segments de dent (10) engrènent radialement, individuellement ou en groupes, dans les dentures extérieures (15) respectives de l'élément de sortie (14) pour réaliser une multiplication.

9. Unité d'entraînement selon au moins l'une des revendications 1 à 8, **caractérisée par le fait que** l'élément de sortie (14) est réalisée sous forme d'arbre ou d'arbre creux à denture extérieure (15).

10. Unité d'entraînement selon au moins l'une des revendications 6 à 9, **caractérisée par le fait que** l'élément intermédiaire (13) est réalisé sous forme de bague de roulement intermédiaire, de palier à rouleaux ou lisse segmenté.

11. Unité d'entraînement selon au moins l'une des revendications 1 à 10, **caractérisée par le fait que** l'élément d'entraînement (4) de l'étage de démultiplication présente une pluralité d'excitateurs de champ magnétique (5) disposés radialement à l'extérieur.

12. Unité d'entraînement selon au moins l'une des revendications 1 à 12, **caractérisée par le fait que** le boîtier (1) est réalisé sous forme de stator (2) dans lequel sont disposées une pluralité de bobines d'excitation (3), pour entraîner en rotation autour d'un axe central (M) l'élément d'entraînement (4) équipé d'excitateurs de champ magnétique (5)..

13. Unité d'entraînement selon au moins l'une des revendications 1 à 12, **caractérisée par le fait qu'**un montage de l'élément d'entraînement (4) a lieu entre l'élément de sortie (14) et l'élément (8) par l'intermédiaire d'éléments de palier (16.1, 16.2).
